# EUROPEAN PATENT SPECIFICATION

(11) **EP 1 046 177 B1**
(45) Date of publication and mention of the grant of the patent: **20.10.2004**
(21) Application number: 98964663.3
(22) Date of filing: 22.12.1998
(51) Int. Cl.: H01B 3/44

(54) **AN ELECTRIC DC-CABLE WITH AN INSULATION SYSTEM**
ELEKTRISCHES GLEICHSTROMKABEL MIT EINER ISOLATIONSANORDNUNG
CABLE ELECTRIQUE POUR COURANT CONTINU DOTE D'UN SYSTEME D'ISOLATION

(30) Priority: 22.12.1997 SE 9704825
(43) Date of publication of application: 25.10.2000
(73) Proprietor: ABB AB, 721 83 Västeras (SE)
(72) Inventor: CARSTENSEN, Peter, S-141 42 Huddinge (SE); GUSTAFSSON, Anders, S-72213 Västeras (SE); FARKAS, Andreas, S-444 41 Stenungsund (SE); ERICSSON, Anders, S-371 34 Karlskrona (SE); BOSTRÖM, Jan-Ove, S-444 96 Ödsmal (SE); GUSTAFSSON, Bill, S-444 41 Stenungsund (SE); NILSSON, Ulf, S-423 70 Säve (SE); CAMPUS, Fred, CH-1262 Eysins (CH)
(74) Representative: Dahlstrand, Björn
(86) International application number: PCT/SE1998/002432
(87) International publication number: WO 1999/033069

(56) References cited:
- EP-A- 0 475 561
- EP-A- 0 579 434
- US-A- 5 298 564

## Description

The present invention relates to the use of an insulation system comprising an extruded and cross-linked polyethylene composition, for the manufacture of an insulated electric direct current cable, a DC-cable, with a current- or voltage-carrying body, i.e. a conductor and an insulation system disposed around the conductor.

The present invention relates in particular to an insulated electric DC cable for transmission and distribution of electric power. The extruded insulation system comprises a plurality of layers, such as an inner semi-conductive shield, an insulation and an outer semi-conductive shield. At least the extruded insulation comprises a cross-linked polyethylene based electrically insulating composition with a system of additives such as cross-linking agent, scorch retarding agent and anti-oxidant.

### BACKGROUND ART

Although many of the first electrical supply systems for transmission and distribution of electrical power were based on DC technology, these DC systems were rapidly superseded by systems using alternating current, AC. The AC systems had the desirable feature of easy transformation between generation, transmission and distribution voltages. The development of modem electrical supply systems in the first half of this century was exclusively based on AC transmission systems. However, by the 1950s there was a growing demand for long transmission schemes and it became clear that in certain circumstances there could be benefits by adopting a DC based system. The foreseen advantages include a reduction of problems typically encountered in association with the stability of the AC-systems, a more effective use of equipment as the power factor of the system is always unity and an ability to use a given insulation thickness or clearance at a higher operating voltage. Against these very significant advantages has to be weighed the high cost of the terminal equipment for conversion of the AC to DC and for inversion of the DC back again to AC. However, for a given transmission power, the terminal costs are constant and therefore, DC transmission systems were rendered economical for the schemes involving long distances. Thus DC technology becomes economical for systems intended for transmission over long distances as for when the transmission distance typically exceed the length for which the savings in the transmission equipment exceeds the cost of the terminal plant.

An important benefit of DC operation is the virtual elimination of dielectric losses, thereby offering a considerable gain in efficiency and savings in equipment. The DC leakage current is of such small magnitude that it can be ignored in current rating calculations, whereas in AC cables dielectric losses cause a significant reduction in current rating. This is of considerable importance for higher system voltages. Similarly, high capacitance is not a penalty in DC cables. A typical DC-transmission cable include a conductor and an insulation system comprises a plurality of layers, such as an inner semi-conductive shield, an insulation base body and an outer semi-conductive shield. The cable is also complemented with casing, reinforcement etc to withstand water penetration and any mechanical wear or forces during, production installation and use.

Almost all the DC cable systems supplied so far have been for submarine crossings or the land cable associated with them. For long crossings the mass-impregnated solid paper insulated type cable is chosen because there are no restrictions on length due to pressurizing requirements. It has been supplied for operating voltages of 450 kV. To date an essentially all paper insulation body impregnated with a electric insulation oil has been used but application of laminated material such as a polypropylene paper laminate is being persuaded for use at voltages up to 500 kV to gain advantage of the increased impulse strength and reduced diameter.

As in the case of AC transmission cables, transient voltages is a factor that has to be taken into account when determining the insulation thickness of DC cables. It has been found that the most onerous condition occurs when a transient voltage of opposite polarity to the operating voltage is imposed on the system when the cable is carrying full load. If the cable is connected to an overhead line system, such a condition usually occurs as a result of lightning transients.

Extruded solid insulation based on a polyethylene, PE, or a cross linked polyethylene, XLPE, has for almost 40 years been used for AC transmission and distribution cable insulation. Therefore the possibility of the use of XLPE and PE for DC cable insulation has been under investigation for many years. Cables with such insulations have the same advantage as the mass impregnated cable in that for DC transmission there are no restrictions on circuit length and they also have a potential for being operated at higher temperatures. In the case of XLPE, 90 °C instead of 50 °C for conventional DC-cables. Thus offering a possibility to increase the transmission load. However, it has not been possible to obtain the full potential of these materials for full size cables. It is believed that one of the main reasons being the development of space charge in the dielectric when subjected to a DC-field. Such space charges distort the stress distribution and persist for long periods because of the high resistivity of the polymers. Space charges in an insulation body do when subjected to the forces of an electric DC-field accumulate in a way that a polarized pattern similar to a capacitor is formed. There are two basic types of space charge accumulation patterns, differing in the polarity of the space charge accumulation in relation to the polarity. The space charge accumulation results in a local increase at certain points of the actual electric field in relation to the field, which would be contemplated when considering the geometrical dimensions and dielectric characteristics of an insulation. The increase noted in the actual field might be 5 or even 10 times the contemplated field. Thus the design field for a cable insulation must include a safety factor taking account for this considerably higher field resulting in the use of thicker and/or more expensive materials in the cable insulation. The build up of the space charge accumulation is a slow process, therefore this problem is accentuated when the polarity of the cable after being operated for a long period of time at same polarity is reversed. As a result of the reversal a capacity field is superimposed on the field resulting from the space charge accumulation and the point of maximal field stress is moved from the interface and into the insulation. Attempts have been made to improve the situation by the use of additives to reduce the insulation resistance without seriously affecting the other properties. To date it has not been possible to match the electrical performance achieved with the impregnated paper insulated cables and no commercial polymeric insulated DC cables have been installed. However, successful laboratory tests have been reported on a 250 kV cable with a maximum stress of 20 kV/mm using XLPE insulation with mineral filler (Y.Maekawa et al, Research and Development of DC XLPE Cables, JiCable'91, pp. 562- 569). This stress value compares with 32 kV/mm used as a typical value for mass-impregnated paper cables.

An extruded resin composition for AC cable insulation typically comprises a polyethylene resin as the base polymer complemented with various additives such as a peroxide cross-linking agent, a scorch retarding agent and an anti-oxidant or a system of antioxidants, this is described in European Patent document EP-A1-0 579 434. In the case of an extruded insulation the semi-conductive shields are also typically extruded and comprise a resin composition that in addition to the base polymer and an electrically conductive or semi-conductive filler comprises essentially the same type of additives. The various extruded layers in an insulated cable in general are often based on a polyethylene resin. Polyethylene resin means generally and in this application a resin based on polyethylene or a copolymer of ethylene, wherein the ethylene monomer constitutes a major part of the mass. Thus polyethylene resins may be composed of ethylene and one or more monomers which are copolymerisable with ethylene. LDPE, low density polyethylene, is today the predominant insulating base material for AC-cables. To improve the physical properties of the extruded insulation and its capability to withstand degradation and decomposition under the influence of the conditions prevailing under production, shipment, laying, and use of such a cable the polyethylene based composition typically comprises additives such as;
- stabilizing additives, e.g. antioxidants, electron scavengers to counteract decomposition due to oxidation; radiation etc.;
- lubricating additives, e.g. stearic acid, to increase processability;
- additives for increased capability to withstand electrical stress, e.g. an increased water tree resistance , e.g. polyethylene glycol, silicones etc.; and
- cross-linking agents such as peroxides, which decompose upon heating into free radicals and initiate cross-linking of the polyethylene resin, sometimes used in combination with
- unsaturated compounds having the ability to enhance the cross-linking density.

The number of various additives is large and the possible combinations thereof is essentially unlimited. When selecting an additive or a combination or group of additives the aim is that one or more properties shall be improved while others shall be maintained or if possible also improved. However, in reality it is always next to impossible to forecast all possible side effects of a change in the system of additives. In other cases the improvements sought for are of such dignity that some minor negative have to be accepted, although there is always an aim to minimize such negative effects.

A typical polyethylene based resin composition to be used as an extruded, cross-linked insulation in an AC-cable comprises:
97,1 - 98,9 % by weight of low density polyethylene (922 kg/m³) of melt flow rate 0,4 - 2,5 g/10 min.
0,1 - 0,5 % by weight of an antioxidant SANTONOX R® (Flexsys Co) with the chemical designation 4,4'-thio-bis(6-tert-butyl-m-cresol), here referred to as compound (A)
1,0 - 2,4 % by weight of a cross linking agent, DICUP R® (Hercules Chem) with the chemical designation dicumyl peroxide.
Although some disadvantages with the use of Santonox R® as an antioxidant have been known for a long time its advantages (e.g. its ability to prevent scorch i.e. premature cross linking) have outweighed these drawbacks. Furthermore it is well known that this cross linked composition exhibits a strong tendency to form space charges under DC electric fields, thus making it unusable in insulation systems for DC cables. However, it is also known that extended degassing ,i.e. exposing the cross linked cable at high temperatures to a high vacuum for long periods of time, will result in a somewhat decreased tendency to space charge accumulation under DC voltage stress. It is generally believed that the vacuum treatment removes the peroxide decomposition products, such as "acetophenone" and "cumyl alcohol", from the insulation whereby the space charge accumulation is reduced. Degassing is a time-consuming batch-process comparable with impregnation of paper insulations and thus as costly. Therefore it is advantageous if the need for degassing is removed. Most known cross-linked polyethylene compositions used as extruded insulation in AC-cable exhibit a tendency for space charge accumulation which renders them unsuitable for use in insulation systems for DC-cables.

### OBJECTS OF THE INVENTION

It is an object of the present invention to provide an insulated DC-cable with an electrical insulation system suitable for use as a transmission and distribution cable in networks and installations for DC transmission and distribution of electric power. The cable shall comprise a solid extruded conductor insulation that can be applied and processed without the need for any lengthy time consuming batch-treatment such as impregnation or degassing, i.e. vacuum treatment of the cable. Thereby reducing the production time and thus the production costs for the cable and thereby offering the possibility for an essentially continuous or at least semi-continuous production of the cable insulation system. Further, the reliability, low maintenance requirements and long working life of conventional DC-cables comprising a mass impregnated paper-based insulation shall be maintained or improved. That is, the cable according to the present invention shall have stable and consistent dielectric properties and a high and consistent electric strength. The cable insulation shall exhibit a low tendency to space charge accumulation, a high DC breakdown strength, a high impulse strength and high insulation resistance. The replacement of the impregnated paper or cellulose based tapes with an extruded polymeric insulation shall as an extra advantage open for an increase in the electrical strength and thus allow an increase in operation voltages, improve handleability and robustness of the cable.

It is also an object to provide a cable comprising an extruded, cross linked insulation based on polyethylene which has low or no space charge accumulation in the insulation during DC electric stresses, thereby eliminating or at least substantially reducing any problem associated with space charge accumulation. It shall also provide a capacity to reduce safety factors in design values used for dimensioning the cable insulation

It is further the object to provide a method for manufacturing the insulation of such an insulated DC cable according to the present invention. The process according to this aspect of the present invention for application and processing of the conductor insulation shall be essentially free from operating steps requiring a lengthy batch treatment of complete cable lengths or long lengths of cable core. The process shall also exhibit a potential for being used in a continuous or semi-continuous way for production of long lengths of DC-cable.

### SUMMARY OF THE INVENTION

Use of a polyethylene based compound with additives including a cross linking agent, a scorch retarding agent and an antioxidant system for manufacture of an extruded cross-linked conductor insulation disposed around the conductor of a DC electric power cable. According to the present invention in its general concept the scorch retarding agent comprises compound (D), 2,4-diphenyl-4-methyl-pentene-1, and the antioxidant system comprises compound (C), a diester of 3-(3,5-di-tert-butyl-4-hydroxyphenyl) propionicacid and thiodiglycol.

The compounded polyethylene based insulation is typically extruded and heated to an elevated temperature and for a period of time long enough to cross link the insulation. The temperature and the period of time is controlled so as to substantially suppress or essentially avoid any undesired by-products being formed in the cross-linked composition.

The cable insulation can be applied with an essentially continuous process without the need for lengthy batch treatments as e.g. vacuum treatment. The low tendency for space charge accumulation and increased DC breakdown strength of conventional DC-cables comprising an impregnated paper insulation is maintained or improved. The insulating properties of the DC-cable according to the present invention exhibit a general long term stability such that the working life of the cable is maintained or increased. This achieved by the balanced additions of the scorch retarding agent, the peroxide cross-linking agent and the antioxidant system in combination with the controlled process temperatures and processing times according to the invention as exemplified in the coming.

### DETAILED SPECIFICATION OF THE INVENTION

One polyethylene based compound, especially suited for DC-cables comprises a combined two component antioxidant system, where a primary phenolic antioxidant compound (C), a diester of 3-(3,5-di-tert-butyl-4-hydroxyphenyl) propionicacid and thiodiglycol is complemented with a so called secondary antioxidant (or thio-synergist) compound (B), a di-alkyl-thio-dipropionate , such as, DSTDP, di-stearyl-thio-dipropianate or alternatively, DLTDP, di-lauroyl-thio-dipropionate. Preferably the alkyl is a linear or branched saturated alkyl group with 8 to 20 carbon atoms.

The DC-cable comprises the combined two component antioxidant consisting of compound (C) and compound (B) added to the polyethylene at a level of from 0.1 to 0.8 % by weight, preferably of from 0.2 to 0.5 % by weight. Compound (C), a diester of 3-(3,5-di-tert-butyl-4-hydroxyphenyl) propionicacid and thiodiglycol is well known and commercially available under the trade name IRGANOX 1035® from Ciba-Geigy and known for use as a component in antioxidant systems for extruded, cross linked insulation's in AC cables, where it typically is added in amounts of about 0,2 % by weight. To increase the antioxidant efficiency a hydroperoxide decomposer compound (B) is added. Compound (B) is, in the form of, DSTDP, di-stearyl-thio-dipropianate commercially available under the trade name IRGANOX PS802, from Ciba-Geigy plc or HOSTANOX SE2 from Hoechst AG alternatively is DLTDP, di-lauroyl-thio-dipropionate, commercially available as IRGANOX 800, from Ciba-Geigy plc and HOSTANOX SE1, Hoechst AG. However, compound (C) or the combination of compound (C) and (B) does not have the scorch retarding properties of compound (A). Therefore compound (D) is added as a scorch retarding agent, whereby any undesired premature cross linking during the extrusion process is essentially avoided. The scorch retarding agent (D), 2,4-diphenyl-4-methyl-pentene-1, is commercially available from Nippon Oil and Fats under the tradename Nofmer MSD ®. The use of this modified combined system that incorporates the scorch retarding agent (D) as a complement to the antioxidant system comprising compound (C) has proven successful to suppress any tendency for scorch and as an extra advantage it has increased the final cross linking ratio in the polyethylene composition.

Thus the DC-cable comprises a conductor and an extruded, cross-linked polyethylene based insulation disposed around the conductor where the polyethylene compound comprises a peroxide cross-linking agent, a scorch retarding agent consisting of compound (D) and a combined antioxidant system consisting of compounds (B) and (C). The DC cable must since compound (B) under certain conditions catalyzes water-formation from cumyl alcohol be processed under conditions where this water formation is suppressed. Therefore the cable insulation is processed at temperatures sufficiently low to suppress this formation of water. The product temperature during extrusion and cross-linking is kept below 230 °C. This shall be compared with a typical product temperature of about 300 °C for processing of conventional XLPE systems. Preferably the product temperature is kept within a range of from about 200 °C to 220 °C. The term "product temperature" means in this application the maximum temperature at any point within the product, i.e. the extruded insulation. The processing time at this temperature is kept below 10 minutes, preferably within a range from 2 minutes to 5 minutes. These restrictions in product temperature and times at this temperature restrict the thickness of the insulation which can be extruded and cross-linked to a thickness of approximately 10 mm or less. The DC-cable also exhibits a minimized content of excess peroxide cross-linking agent in the cross-linked polyethylene insulation. This is obtained by the limited and controlled addition of the cross-linking agent in combination with the promotion of grafted bridges between polymer chains provided by scorch retarding agent, compound (D). The insulation system is typically a three layered system comprising a first inner semi-conductive shield, an insulation, with a thickness deemed to be suitable in view of the electrical or mechanical forces acting on the cable and the thermal situation upon use, and a second outer semi-conductive shield. This insulation system is typically applied by a true triple extrusion process, but can of course be applied by other suitable extrusion processes.

The scorch retarding agent, compound (D), 2,4-diphenyl-4-methyl-pentene-1, is according to the present invention added at a level of from 0.1 to 1.0 % by weight. Preferably is it at a level of from 0.2 to 0.5 % by weight.

The peroxide cross-linking agent is added at a level of from 1.0 to 2.4 % by weight, preferably at a level of from 1.2 to 1.8 % by weight. Preferably the peroxide cross-linking agent is dicumyl peroxide.

The polyethylene resin is a low density polyethylene with a melt flow rate MFR, within a range from 0.5 to 2. g/ 10 min. MFR is determined at 190 °C/2.16 kg according to ISO 1133 cond. 4.

According to another example the DC cable comprises an extruded, cross-linked polyethylene based insulation disposed around the conductor where the polyethylene compound comprises a peroxide cross-linking agent, a scorch retarding agent consisting of compound (D), 2,4-diphenyl-4-methyl-pentene-1,and as antioxidant compound (C), a diester of 3-(3,5-di-tert-butyl-4-hydroxyphenyl) propionicacid and thiodiglycol, only . By this strictly specified combination of additives consisting of a specified antioxidant component, a likewise specified scorch retarding agent and a peroxide cross-linking agent a low content of polar by-products in the cross-linked composition is assured as any tendency to formation of such compounds upon processing at elevated temperatures is suppressed. In addition to the substantial freedom from such by-product formation in the resin composition the combination of additives offers the advantage that the added amount of the peroxide cross-linking agent can be reduced and controlled within narrow margins and still ensure the desired ratio of cross-linking. The polyethylene compound can be cross-linked without any upper limits in temperature and time. The DC-cable comprises an antioxidant consisting of compound (C) only. Compound (C), a diester of 3-(3,5-di-tert-butyl-4-hydroxyphenyl) propionicacid and thiodiglycol, is added to the polyethylene resin at a level of from 0.1 to 0.5 % by weight, preferably of from 0.2 to 0.4 % by weight.

The DC cable is provided with an insulation which is applied using conventionally used processing conditions. Thus the compounded resin composition is extruded and cross-linked at a product temperature above 230 °C, but below 400 °C where thermal degradation occurs. There is not any restriction as to the time at the elevated extrusion and cross-linking temperatures and therefore DC-cables with a larger thickness of insulation can be produced. The cable is typically extruded and cross-linked at a temperature of 230 °C or above for up to 120 minutes or more. Preferably the cable insulation is processed at a temperature within a range of from 240 °C to 350 °C and typically at 270 °C for a time period within a range of from 20 minutes to 120 minutes. The DC-cable may exhibit an insulation system of any thickness. Apart from the increased product temperature and processing time the extrusion process for application of the insulation is essentially the same as described in the foregoing. The scorch retarding agent, compound (D), is also added at a level of from 0.1 to 1.0 % by weight. Preferably is it at a level of from 0.2 to 0.5 % by weight. The peroxide cross-linking agent is likewise added at a level of from 1.0 to 2.4 % by weight, preferably at a level of from 1.2 to 1.8 % by weight. Preferably the peroxide cross-linking agent is dicumyl peroxide. The polyethylene resin is likewise typically a low density polyethylene with a melt flow rate MFR, within a range from 0.5 to 10 g/ 10 min. MFR is determined at 190 °C/2.16 kg according to ISO 1133 cond. 4.

A DC-cable according to the present invention typically comprises from the center and outwards;
- a conductor of any desired shape and constitution, such as a stranded multi-wire conductor, a solid conductor or a segmental conductor;
- a first extruded semi-conducting shield disposed around and outside the conductor and inside the conductor insulation;
- an extruded conductor insulation according to the present invention as described in the foregoing;
- a second extruded semi-conducting shield disposed outside the conductor insulation
- a metallic screen; and
- a sheath arranged outside the metallic screen. The cable can when deemed appropriate be complemented with further features such as reinforcing wires outside the outer extruded shield, sealing compound or a water swelling powder for filling any interstices in and around the conductor, other metal/polymer interfaces may be sealed in order to prevent water from spreading along such interfaces. The three layers of the insulation system is typically applied around the conductor using a true triple extrusion process.

In its most general form the process for production of an insulated DC-cable comprising a conductor and an extruded cross-linked polyethylene based conductor insulation includes the following steps;
- laying or otherwise forming a conductor of any desired shape and constitution;
- compounding a polyethylene based resin composition comprising additions of a peroxide cross-linking agent, a scorch retarding agent and an antioxidant system;
- extruding the compounded polyethylene based resin composition to form a conductor insulation disposed around the conductor in the DC-cable, preferably the three layered insulation system comprising the insulation layer complemented with the two semi-conducting shields is applied using a true triple extrusion process;
- cross-linking the extruded insulation
- wherein according to the present invention a scorch retarding agent comprising compound (D), 2,4-diphenyl-4-methyl-pentene-1, is added to the polyethylene resin upon compounding;
- an antioxidant comprising compound (C), a diester of 3-(3,5-di-tert-butyl-4-hydroxyphenyl) propionicacid and thiodiglycol, is added to the polyethylene resin upon compounding; and
- that the compounded polyethylene based resin composition is extruded and cross-linked at an elevated temperature and for a period of time long enough to cross link the insulation. The temperature is controlled and the period of time is limited so as to substantially suppress or essentially avoid undesired polar by-products being formed in the cross-linked composition.
Preferably the additions upon compounding are balanced such that the amount of excessive peroxide cross-linking agent present in the cross-linked insulation can be minimized.

According to one example a scorch retarding agent comprising compound (D), 2,4-diphenyl-4-methyl-pentene-1 and a combined two component antioxidant system comprising compounds (B), a di-alkyl-thio-dipropionate, and (C), a di-ester of 3-(3,5-di-tert-butyl-4-hydroxyphenyl) propionic acid and thiodiglycol, is added to the polyethylene resin upon compounding. The compounded polyethylene based resin composition is thereafter extruded and cross-linked at a suitable product temperature and for a suitable period of time, typically below of 230 °C or above for 10 minutes or less. Preferably the cable insulation is processed at a temperature within a range of from 200 °C to 220 °C for a temperature within a range of from 2 minutes to 5 minutes. As compound (B) catalyzes water-formation from cumyl alcohol the cable insulation is processed under the conditions given in the foregoing sentence whereby this water formation is suppressed. The DC-cable is most suited in installations where a reduced insulation thickness is sought for and suitable, that is a insulation thickness of approximately 10 mm or less. This DC-cable also comprise a minimized content of excess peroxide cross-linking agent obtained by a limited and controlled addition of the cross-linking agent in combination with the promotion of grafted bridges between polymer chains provided by scorch retarding agent, compound (D), 2,4-diphenyl-4-methyl-pentene-1. A combined antioxidant consisting of compound (C), a diester of 3-(3,5-di-tert-butyl-4-hydroxyphenyl) propionic acid and thiodiglycol, and compound (B), a di-alkyl-thio-dipropionate, is added to the polyethylene at a level of from 0.1 to 0.8 % by weight, preferably of from 0.2 to 0.5 % by weight.

According to another example a scorch retarding agent comprising compound (D) and an antioxidant consisting of compound (C) only, is added to the polyethylene resin upon compounding. The compounded polyethylene based resin composition is thereafter extruded and cross-linked at a suitable temperature and for a suitable period of time, typically above of 230 °C or above for up to 120 minutes or more. Preferably the cable insulation is processed at a product temperature within a range of from 240 °C to 350 °C for a temperature within a range of from 20 minutes to 120 minutes. Formation of undesired by-products in the extruded, cross-linked insulation is essentially eliminated or at least substantially suppressed by the strictly controlled selection of additives. The balanced addition of the peroxide cross-linking agent and the scorch retarding agent results in a substantial reduction of excess peroxide in the polyethylene composition after cross-linking. Thus any tendency for space charge accumulation upon use of the DC-cable is substantially reduced and the DC-breakdown strength is substantially increased. The DC-cable is typically produced with any thickness of the insulation that is deemed to be required by the electrical or mechanical forces acting on the cable or the thermal situation upon use. An antioxidant consisting of compound (C) only, a diester of 3-(3,5-di-tert-butyl-4-hydroxyphenyl) propionic acid and thiodiglycol, is added to the polyethylene resin at a level of from 0.1 to 0.5 % by weight, preferably of from 0.2 to 0.4 % by weight.

A DC cable according to the present invention with an insulation that comprises an extruded, cross linked polyethylene compound with the specific combination of additives and processing mentioned above exhibiting considerable advantages such as;
- A low tendency for space charge accumulation,
- An increased DC breakdown strength.
Further advantages with DC cable according to the present invention are among others;
- An essential elimination of the scorch problem, thus ensuring a homogeneous cable insulation,
- A high and controlled degree of cross linking which provides the desired high temperature mechanical properties to the cable insulation; and
- Improved heat aging properties, which ensures the desired long working life of the cable also when used at high loads.

The specific combinations of chosen systems of additives and set-ups of process parameters, including a suitable compounding and processing during extrusion and cross-linking acts to suppress any formation of space charge accumulating by-products upon cross-linking. The scorch retarding agent (D), 2,4-diphenyl-4-methyl-pentene-1, that promotes the formation of grafted bridges between the polymer chains in the polyethylene, offers the possibility to ensure that a desired ratio of cross-linking is safely achieved even with a reduced and strictly controlled addition of peroxide cross-linking agent. Thus an essential elimination or a substantial reduction of excess peroxide remnants in the insulation of the DC- cable can be achieved. Apart from the technical advantages obtained as a result of this, as discussed earlier, this is also advantageous considering the cost of the peroxide cross-linking agent. Consequently a DC-cable according to the present invention with an insulation comprising an extruded, cross-linked polyethylene compound with this specific combination of additives and processed in the described way exhibit considerable advantages such as a low tendency for space charge accumulation, improved and stable electrical properties. A DC-cable according to the present invention comprising an extruded, cross-linked conductor insulation as defined in the foregoing ensures long term stable and consistent dielectric properties and a high and consistent electric strength as good or better than for a conventional wound and impregnated cable. This is especially important due to the long life such installations are designed for, and the limited access for maintenance of such installations in remote locations or even sub-sea. Further an insulated DC-cable as described in the foregoing offers the possibility of an essentially continuous or semi-continuous process for the application of the insulation without any need for batch treatments, such as degassing or impregnation to ensure the performance and stability of the cable insulation. Thereby the possibilities are offered for a reduced production time by the adoption of an essentially continuous process free from operating steps requiring batch treatment of complete cable lengths or part lengths and lead to cost advantages compared with maintained or even improved properties in relation to conventional cables.

Further the essential elimination of the tendency for accumulation of space charges combined with the increase in the electrical strength allow an increase in operation load, especially in operation voltages. While the possibility of using the extruded cross-linked insulation at increased conductor temperatures opens for an increase in current densities.

### BRIEF DESCRIPTION OF THE DRAWINGS

The present invention shall be described more in detail under reference to the drawings and examples.

Figure 1 show a cross-section of a typical DC-cable according to the present invention for transmission of electric power comprising an extruded, cross-linked insulation.

Figures 2a to 2d show space charge recordings for comparative tests on plates with compositions as used in prior insulated AC-cables and for compositions according to the present invention.

### DESCRIPTION OF PREFERRED EMBODIMENTS, EXAMPLES.

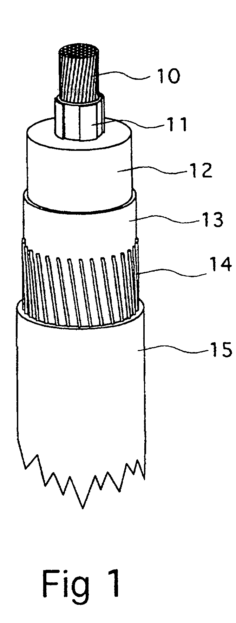

The DC-cable according to the embodiment of the present invention shown in figure 1 comprises from the center and outwards;
- a stranded multi-wire conductor 10;
- a first extruded semi-conducting shield 11 disposed around and outside the conductor 10 and inside a conductor insulation 12;
- an extruded conductor insulation 12 with an extruded, cross-linked composition as described in the foregoing;
- a second extruded semi-conducting shield 13 disposed outside the conductor insulation 12;
- a metallic screen 14; and
- an outer covering or sheath 15 arranged outside the metallic screen 14.

The cable can if deemed appropriate be further complemented in various ways with functional layers or other features. It can for example be complemented with a reinforcement in form of metallic wires outside the outer extruded shield 13, a sealing compound or a water swelling powder introduced in metal/polymer interfaces or a system of radial achieved by e.g. a corrosion resistant metal polyethylene laminate and longitudinal water sealing achieved by water swelling material, e.g. tape or powder beneath the sheath 15.

### EXAMPLE 1

### Comparative tests

Test plates with compositions as used in prior art insulated AC-cables and in accordance with the present invention for use in insulated DC-cables were produced, processed and subjected to an evaluation of the tendency for space charge accumulation by recording space charge profiles using the Pulsed ElectroAccoustic (PEA) technique. The PEA technique is well known within the art and described by Takada et al. in IEEE Trans. Electr. Insul. Vol. EI-22(No.4). pp 497-501(1987).

a, A 2 mm thick test plate of a polyethylene composition comprising:
about 98 % by weight of low density polyethylene (922 kg/m³) of melt flow rate 0,8 g/10 min.
about 0,4 % by weight of an antioxidant SANTONOX R® (Flexsys Co) with the chemical designation 4,4'-thio-bis(6-tert-butyl-m-cresol), and
about 1,6 % by weight of a cross linking agent, DICUP R® (Hercules Chem) with the chemical designation dicumyl peroxide,
was molded at 130°C.

Two semi-conductive electrodes were molded on the test plate and the assembly was cross-linked in an electric press at 180 °C for 15 minutes.

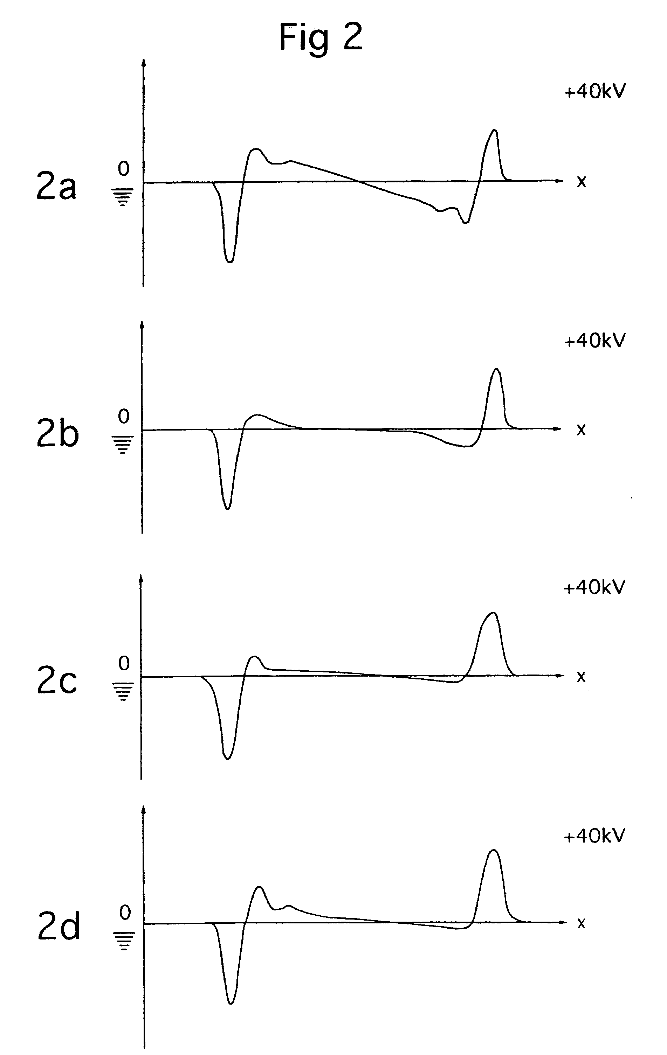

The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2a was recorded for the test plate. Were arbitrary units for space charge/volume is presented as a function of the test plate thickness, i.e. 0 is at the grounded electrode and x indicates the distance from the grounded electrode in the direction towards the + 40 kV electrode.

b, A 2 mm thick test plate of a the same polyethylene composition comprising as in comparative example a was molded, also at 130°C. Two semi-conductive electrodes were molded on this test plate and the assembly was cross-linked in an electric press at 180 °C for 15 minutes. Subsequently the test plate was degassed in a vacuum oven for 72 hours at 80 °C and a pressure of < 10⁻³ torr.

The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2b was recorded for the test plate. Were arbitrary units for space charge/volume is presented as a function of the test plate thickness, i.e. 0 is at the grounded electrode and x indicates the distance from the grounded electrode in the direction towards the + 40 kV electrode.

c, A 2 mm thick test plate of a polyethylene composition comprising:
- about 97.7 % by weight of a low density polyethylene with a MFR of 1.2 g/ 10 min,
- about 1.7 % by weight of a peroxide cross-linking agent in the form of dicumyl peroxide,
- about 0.3 % by weight of compound (D), 2,4-diphenyl-4-methyl-pentene-1, as a scorch retarding agent, and
- about 0.3 % by weight of an antioxidant system consisting of
- compound (B) in the form of DSTDP, di-stearyl-thio-dipropianate and
- compound (C), a diester of 3-(3,5-di-tert-butyl-4-hydroxyphenyl) propionicacid and thiodiglycol, the ratio of compound B to compound C was 1:3,
was molded at 130°C.

Two semi-conductive electrodes were molded on the test plate and the assembly was cross-linked in an electric press at 180 °C for 15 minutes.

The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2c was recorded for the test plate. Were arbitrary units for space charge/volume is presented as a function of the test plate thickness, i.e. 0 is at the grounded electrode and x indicates the distance from the grounded electrode in the direction towards the + 40 kV electrode.

d, A 2 mm thick test plate of a polyethylene composition comprising:
- about 97,7 % by weight of a low density polyethylene with a MFR of 1 g/10,
- about 1.4 % by weight of a peroxide cross-linking agent in the form of dicumyl peroxide,
- about 0.4 % by weight of a scorch retarding agent in the form of compound (D), 2,4-diphenyl-4-methyl-pentene-1, and
- about 0.3 % by weight of an antioxidant system consisting of compound (C), a diester of 3-(3,5-di-tert-butyl-4-hydroxyphenyl) propionicacid and thiodiglycol, was molded at 130 °C.

Two semi-conductive electrodes were molded on the test plate and the assembly was cross-linked in an electric press at 180 °C for 15 minutes.

The 2 mm thick cross-linked test plate was subsequently tested at 50°C in a device for PEA analysis were the plate was inserted between two flat electrodes and subjected to a 40 kV direct voltage electric field. That is one electrode was grounded and the other electrode was held at a voltage potential of + 40kV. The space charge profile as shown in figure 2d was recorded for the test plate. Were arbitrary units for space charge/volume is presented as a function of the test plate thickness, i.e. 0 is at the grounded electrode and x indicates the distance from the grounded electrode in the direction towards the + 40 kV electrode.

### CONCLUSIONS OF COMPARATIVE TESTS

The space charge profiles of the samples in example 1a, 1b, 1c, and 1d recorded 3 hours after the application of the DC voltage are shown in figures 2a, 2b, 2c, and 2d, respectively. It is clearly seen that the space charge accumulation in the insulation material traditionally used in AC XLPE cables (see figure 2a) is high. After degassing the space charge accumulation decreases but still have a significant magnitude (see figure 2b). However, the tendency for space charge accumulation is substantially reduced for the two compositions according to the present invention represented with comparative examples figures c and d. The reduction space charge accumulation is as good as or better than the reduction achieved after the long time degassing process, examples in figure 2a and b.

### EXAMPLE 2

A polyethylene based resin composition was compounded as described in the following. To a low density polyethylene resin with a MFR of 1.2 g/ 10 min following additions were made,
- a peroxide cross-linking agent in the form of dicumyl peroxide was added in an amount of 1.7 % by weight,
- a scorch retarding agent in the form of compound (D), 2,4-diphenyl-4-methyl-pentene-1, was added in an amount of 0.3 % by weight,
and an antioxidant system consisting of
- compound (B) in the form of DSTDP, di-stearyl-thio-dipropianate and
- compound (C), a diester of 3-(3,5-di-tert-butyl-4-hydroxyphenyl) propionicacid and thiodiglycol, was added to the polyethylene resin in a total amount of 0.3 % by weight. The ratio of compound B to compound C was 1:3. The compounded resin composition was extruded to a 8 mm insulation on a shielded, stranded multi-wire conductor and cross-linked at a product temperature of 225 °C and for a limited processing time of 5 minutes.

No significant level of water was detected in the extruded, cross-linked insulation. As water formation typically occurs at high temperature in a system comprising compound (B) that normally catalyzes water-formation from cumyl alcohol, the low water content was taken as proof that the water formation was successfully suppressed by the reduced product temperature and processing temperature.

The tendency for space charge accumulation was, when tested, low and substantially reduced in relation to the space charge accumulation normally detected in conventional extruded cross-linked polyethylene based compositions as used for AC-cables. Thus the cable was considered suitable for use as a DC-cable.

Further benefits were found in the low content of excess peroxide cross-linking agent in the cable insulation after cross-linking and the precise control of the cross-linking degree. These advantages were obtained by the limited and controlled addition of the cross-linking agent in combination with the promotion of grafted bridges between polymer chains provided by scorch retarding agent, compound (D), 2,4-diphenyl-4-methyl-pentene-1.

DC-cables according to this example are primarily intended for DC-cables with thinner insulations, that is insulations of a thickness of approximately 10 mm or less.

### EXAMPLE 3

A polyethylene based resin composition was compounded as described in the following. To a low density polyethylene resin with a MFR of 1 g/10 min the following additions were made, - a peroxide cross-linking agent in the form of dicumyl peroxide was added in an amount of 1.4 % by weight ,
a scorch retarding agent in the form of compound (D), 2,4-diphenyl-4-methyl-pentene-1,was added in an amount of 0.4 % by weight.,
and an antioxidant system consisting of compound (C), a diester of 3-(3,5-di-tert-butyl-4-hydroxyphenyl) propionicacid and thiodiglycol, only was added to the polyethylene resin in an amount of 0.3 % by weight. The compounded resin composition was extruded and cross-linked at a temperature of 300 °C.

The tendency for space charge accumulation was, when tested, low and substantially reduced in relation to the space charge accumulation normally detected in conventional extruded cross-linked polyethylene based compositions as used for AC-cables. Thus the cable was considered suitable for use as a DC-cable.

Further benefits were found in the low content of excess peroxide cross-linking agent in the cable insulation after cross-linking and the precise control of the cross-linking degree. These advantages were obtained by the limited and controlled addition of the cross-linking agent in combination with the promotion of grafted bridges between polymer chains provided by scorch retarding agent, compound (D), 2,4-diphenyl-4-methyl-pentene-1.

A cable produced according to this example was found to be suitable for any thickness of the insulation that is deemed to be required by the electrical or mechanical forces acting on the cable and by the thermal situation upon use.

## Claims

1. Use of a polyethylene based compound with additives including a cross-linking agent, a scorch retarding agent and an antioxidant, wherein the scorch retarding agent comprises a compound (D), 2,4-diphenyl-4-methyl-pentene-1, and wherein the antioxidant comprises a compound (C), a diester of 3-(3,5-di-tert-butyl-4-hydroxyphenyl) propionic acid and thiodiglycol, for the manufacture of an extruded, cross-linked conductor insulation disposed around the conductor of a DC cable, said insulation having a reduced tendency to space charge formation.

## Patentansprüche

1. Verwendung eines auf Polyethylen basierenden Compounds mit Additiven, umfassend ein Vernetzungsmittel, ein Brandverzögerungsmittel und ein Antioxidationsmittel, wobei das Brandverzögerungsmittel ein Compound (D), 2,4-Diphenyi-4-methyl-penten-1 umfasst, und wobei das Antioxidationsmittel ein Compound (C), einen 3-(3,5-Di-tertbutyl-4-hydroxphenyl)propionsäurediester und Thiodiglycol umfasst, für die Herstellung einer extrudierten, vernetzten Leiterisolation, die um den Leiter eines Gleichstrom-Kabels angeordnet ist, wobei die Isolation eine verringerte Neigung zur Bildung von Raumladung aufweist.

## Revendications

1. Emploi d'une composition à base de polyéthylène contenant des adjuvants parmi lesquels un agent de réticulation, un agent retardant la vulcanisation prématurée et un anti-oxydant, l'agent retardant la vulcanisation prématurée comprenant (D) du 2,4-diphényl-4-méthyl-pentène-1 et l'anti-oxydant comprenant (C) du diester de thiodiglycol et d'acide 3-(3,5-di-t-butyl-4-hydroxyphényl)propionique, pour la fabrication d'une gaine isolante réticulée et extrudée, disposée autour du conducteur d'un câble à courant continu, ladite gaine isolante présentant une moindre tendance à la formation de charges d'espace.
